# EUROPEAN PATENT APPLICATION

(11) **EP 4 825 264 A2**
(43) Date of publication of application: **21.10.2026**
(21) Application number: 26168284.3
(22) Date of filing: 26.03.2026
(51) Int. Cl.: A47B 91/02

(54) **ADJUSTABLE LEG**

(30) Priority: 28.03.2025 GB 202504670
(71) Applicant: Howden Joinery Limited, London W1U 1QY (GB)
(72) Inventor: Woodhouse, Oliver, London, W1U 1QY (GB)
(74) Representative: Slingsby Partners LLP

(57) **Abstract**

Disclosed is an adjustable leg (300) for supporting a cabinet, the leg (300) comprising: a first component (310) having an attachment structure (311) for attachment to the cabinet (500) and a first threaded element (312) extending from the attachment structure (311); and a second component (320) comprising a second threaded element (321) threadedly engageable at a first end of the second component (320) with the first threaded element (312), a foot (327) located at an opposite second end of the second component (320), and a driving formation (323) whereby the second component (320) can be engaged by a tool and driven to rotate, the driving formation being located inboard of the thread of the second threaded element (321); the first and second components being configured so that when they are threadedly engaged the driving formation is accessible through the first threaded element (312); wherein the second component (320) comprises a mounting structure, the second threaded element (321) being releasably engageable with the foot (327) through the mounting structure.

## Description

This invention relates to relates to legs, for example for furniture such as cabinets.

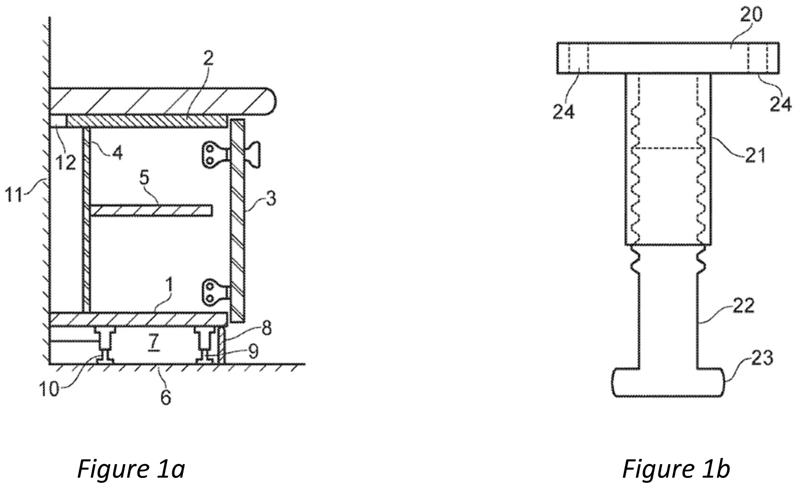

One example of a cabinet is the conventional kitchen cabinet. Figure 1a shows a schematic cross-section through such a cabinet. The cabinet comprises a base 1, top / top rails 2, and back panel 4. A shelf 5 can be suspended from fixings in end walls of the cabinet. A door 3 can be hinged off one of the side/end walls. A worktop can be fitted to the top of the cabinet from fixings through or adjacent to the top rails. The base 1 is raised above the floor 6 of the room where the cabinet is installed, leaving a void 7 between the base and the floor. The front of the void is closed by a kickboard or plinth 8. The base is supported off the floor on legs 9, 10. The cabinet can be attached to a wall 11 at the rear of the cabinet by fixings, for example as shown at 12.

Figure 1b shows the forward leg 9 in more detail. The leg comprises a head plate 20, an upper shaft section 21, a lower shaft section 22 and a foot 23. The head plate 20 can be integral with the upper part of the upper shaft section 21 or a separate part which accepts the upper shaft 21 as a push-in component. The head plate 20 can be screwed or knock-in with an expanding dowel feature to the base 1 of the cabinet through holes 24 so that the upper shaft section extends downwards from the base and into the void 7. The foot 23 is integral with the lower part of the lower shaft section 22. The upper shaft section 21 and the lower shaft section 22 are threaded together so that when one is rotated relative to the other the distance between the foot 23 and the head plate 20 changes. The foot 23 is configured with a serrated radially outer surface so that it can be gripped by an installer to rotate the lower shaft section 22. Adjustable legs of this type can be used to level the cabinet on an uneven floor. During installation the head plate 20 of each of the cabinet's legs is attached to the underside of the cabinet base 1 using screws or knock in dowels. Then the installer rotates each of the feet as necessary so as to alter the length of each leg and thereby arrange for the cabinet to be supported on the floor by means of the legs, with the cabinet base in a horizontal attitude.

This arrangement has a number of problems. First, when the installer comes to adjust the rear legs (e.g. leg 10 in Figure 1a) they must reach their arm under the cabinet in order to grip the foot 23 of the leg and turn it. That is inconvenient and increases the time taken to install the cabinets. Second, if the installer needs to shorten the leg to accommodate a particularly prominent part of the floor, it may be necessary to saw the foot 23 off the lower shaft section 22. With the foot 23 removed it is very difficult to adjust the leg unless a wrench can be engaged on the remainder of the lower shaft section 22. Third, it can be difficult to level especially heavy cabinets (e.g. tall larder cabinets) in this way. To adjust the leg of a heavy cabinet the installer might have to relieve weight from the leg, e.g. by tilting or jacking the cabinet, to make it easier to manually rotate the foot. This is inconvenient and could be unsafe if it is not done correctly.

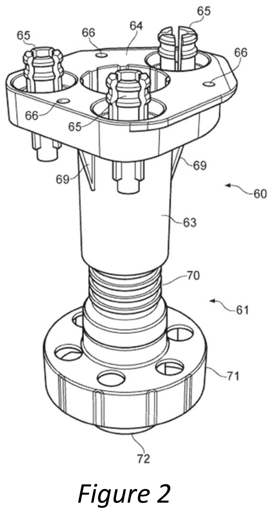

A further prior art kitchen leg is shown in Figure 2. The leg comprises an upper part 60 and a lower part 61. The upper part 60 is rigidly attached to the cabinet. The lower part 61 engages the ground.

The upper part 60 of the rear leg comprises a fixing plate shown generally at 64 and a sleeve 63. The fixing plate 64 and the sleeve 63 may be integral with each other. Extending from the mating surface in the opposite direction to the sleeve 63 are fixing dowels, or more generally lugs, 65. If the leg is to be screwed to the base, e.g. using holes 66, guide marks could be provided on the underside of the base. The fixing dowels or lugs 65 can be mated into corresponding holes in the base of the cabinet. The sleeve 63 is positioned relative to the fixing plate so that it extends downwardly from the base of the cabinet when the leg is attached to a cabinet in situ. A helical thread is formed in the interior of the sleeve 63.

The lower part 61 of the leg comprises a shaft 70, an adjustment collar 71 and a foot 72. The adjustment collar 71 and the shaft 70 may be integral with each other. The foot 72 may be integral with the adjustment collar 71. The shaft 70 is externally threaded, the thread being configured such that the shaft 70 can mate threadedly with the interior thread of the sleeve 63. A driving formation may be provided on the lower part 61 so that the height of the leg may be adjusted. A tool having a straight shaft can be inserted through the upper part 60 of the leg and engaged with the driving formation. This allows the lower part 61 of the leg to be rotated with respect to the upper part of the leg without the lower part of the leg being manually gripped, even when the leg is on the floor and under load.

However, this arrangement also has a number of problems. Firstly, having the shaft 70, an adjustment collar 71 and a foot 72 integral with one another can be difficult to manufacture, particularly if injection moulding is used. Injection moulding may not be suitable, or may be complicated, for the complex structure of the lower part 61 in Figure 2. Secondly, when the installer is adjusting the height of the leg, they may not be able to see the leg through the cabinet base. As such, the installer may not be able to check if the leg is adjusted correctly, without physically measuring the position of the cabinet base with respect to the floor. Thirdly, if the leg is positioned on carpet, or another soft surface, either during assembly or installation, it can be difficult to slide the cabinet over the carpet as the foot 72 may catch on the carpet. Fourthly, the rotation of the upper part 60 with respect to the lower part 61 permits the height of the leg to be adjusted. However, the adjustment may not permit the leg to reach a configuration which is low enough for some implementations, such as use as a bedroom cabinet leg. Bedroom cabinets may be lower than kitchen cabinets.

There is a need for an improved form of adjustable leg and/or an improved form of cabinet kit and/or an improved method of assembly.

According to a first aspect of the present invention there is provided an adjustable leg for supporting a cabinet, the leg comprising: a first component having an attachment structure for attachment to the cabinet and a first threaded element extending from the attachment structure; and a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element; the first and second components being configured so that when they are threadedly engaged the driving formation is accessible through the first threaded element; wherein the second component comprises a mounting structure, the second threaded element being releasably engageable with the foot through the mounting structure.

In some implementations, the mounting structure may comprise: a lip protruding from the second threaded element; and a clip protruding from the foot, the clip being engageable with the lip so as to restrict displacement of the second threaded element from the foot.

In some implementations, the lip may extend around the perimeter of the second end of the second threaded element.

In some implementations, the clip may extend around an arc of at least part of the perimeter of the second end of the second threaded element.

In some implementations, the mounting structure may comprise a plurality of clips.

In some implementations, the mounting structure may comprise: a first splined portion located on the second threaded element; and a second splined portion located on the foot, the second spline portion being engageable with the first splined portion so as a prevent rotation of the second threaded element relative to the foot.

In some implementations, the first splined portion may be located inboard of the thread of the second threaded element, and the second splined portion is located on a protrusion of the foot that protrudes into the first splined portion.

In some implementations, the first splined portion and the second splined portion may have the same order of symmetry as the number of individual splines of the first splined portion and the second splined portion.

In some implementations, the first splined portion and the second splined portion may have a different order of symmetry to the number of individual splines of the first splined portion and/or the second splined portion.

In some implementations, the first splined portion and the second splined portion may have a lower order of symmetry to the number of individual splines of the first splined portion and/or the second splined portion.

According to a second aspect of the present invention there is provided an adjustable leg for supporting a cabinet, the leg comprising: a first component having an attachment structure for attachment to the cabinet and a first threaded element extending from the attachment structure; and a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element; the first and second components being configured so that when they are threadedly engaged the driving formation is accessible through the first threaded element; wherein the leg comprises a nominal height member, the nominal height member being located in the threaded path of the first component and/or the second component in a nominal height position such that the nominal height member restricts movement of the first component relative to the second component in a direction away from a nominal height configuration of the leg.

In some implementations, the leg may further comprise: a short height configuration in which the first component is closer to the second component than in the nominal height configuration; and a tall height configuration in which the first component is farther from the second component than in the nominal height configuration.

In some implementations, the leg may be configured such that: movement of the first component relative to the second component in a direction away from the nominal height configuration towards the short configuration is restricted by the nominal height member; and movement of the first component relative to the second component in a direction away from the nominal height configuration towards the tall configuration is not restricted by the nominal height member.

In some implementations, the nominal height member may be located outboard of the thread of the second threaded element and in the threaded path of the first component.

In some implementations, the nominal height member may extend from the foot towards the first component along a side of the thread of the second threaded element to the nominal height position.

In some implementations, in the nominal height configuration of the leg, the first component may rest on the nominal height member.

In some implementations, in the short height configuration, the nominal height member may be pushed outboard of the first component by the first component.

In some implementations, the nominal height member may be integral with the foot.

In some implementations, the nominal height member may be integral with the second threaded element.

In some implementations, the second threaded element is releasably engageable with the foot.

According to a third aspect of the present invention there is provided an adjustable leg for supporting a cabinet, the leg comprising: a first component having an attachment structure for attachment to the cabinet and a first threaded element extending from the attachment structure; and a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element; the first and second components being configured so that when they are threadedly engaged the driving formation is accessible through the first threaded element; wherein the foot comprises a base for supporting the leg on a working surface and an adjustment collar, an outer surface of the base extending uninteruptably from a lowest point of the base to the adjustment collar.

In some implementations, the base may form a domed shape.

In some implementations, the diameter of the base may be larger than the diameter of the thread of the second threaded element.

In some implementations, the diameter of the base may be at least twice the diameter of the thread of the second threaded element.

According to a fourth aspect of the present invention there is provided an adjustable leg for supporting a cabinet, the leg comprising: a first component having an attachment structure for attachment to the cabinet and a first threaded element extending from the attachment structure; and a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element; the first and second components being configured so that when they are threadedly engaged the driving formation is accessible through the first threaded element; wherein the foot comprises a base for supporting the leg on a working surface, the foot forming a cup defined by an inner surface of the base, the first threaded element being receivable in the cup when the first threaded element is threadedly engaged with the second threaded element.

In some implementations, the first threaded element may be contactable with the inner surface of the base when the first threaded element is threadedly engaged with the second threaded element.

According to a fifth aspect of the present invention there is provided an adjustable leg as described in two or more of first to fourth aspects.

According to a sixth aspect of the present invention there is provided an adjustable leg as described in the fifth aspect comprising any of the features described in the statements above.

According to a seventh aspect of the present invention there is provided a kit comprising a leg as described in the statements above and a cabinet base.

In some embodiments, the cabinet base may define (i) a hole therethrough and (ii) a corresponding cabinet base attachment structure to the leg attachment structure for attachment to the leg, the cabinet base attachment structure being positioned relative to the hole such that when the leg is attached to the cabinet base with the leg attachment structure engaged with the cabinet base attachment structure the driving formation is accessible through the hole.

In some embodiments, the cabinet is a kitchen cabinet or a bedroom cabinet.

In some embodiments, the cabinet may comprise one or more of: a plurality of side panels, a frontal, a hinge, a drawer box, a frontal handle, an integrated sliding mechanism, a bi-folding mechanism, a push to open mechanism, decorative panelling, a profile, a worktop, internal integrated lighting, an electrical integrated appliance, a top box cabinet, bridging units that integrate and support off the legged cabinet, and an internal accessory such as a shoe shelve, adjustable shelving, pull out locking shelving, a worktop, a hanging unit, a trouser rail, a tie rail, ironing board storage, a mirror, storage organisation unit, a basket, a drawer organisation unit, a corner storage accessory, a pull out storage tower accessory, a door balcony, a frontal back accessory, and a laundry storage unit.

According to an eighth aspect of the present invention there is provided a method of assembling a cabinet kit, the kit comprising a cabinet base having a hole therethrough and an adjustable leg, the adjustable leg comprising: a first component having an attachment structure for attachment to the cabinet and a first threaded element extending from the attachment structure; and a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element; the first and second components being configured so that when they are threadedly engaged the driving formation is accessible through the first threaded element; wherein the second component comprises a mounting structure, the second threaded element being releasably engageable with the foot through the mounting structure; the method comprising: attaching the leg to the base in a location such that the second component can be engaged by a tool passing through the hole in the base; positioning the base in a desired installation location; and adjusting the leg by means of a tool passing through the hole.

According to an ninth aspect of the present invention there is provided a method of assembling a cabinet kit, the kit comprising a cabinet base having a hole therethrough and an adjustable leg, the adjustable leg comprising: a first component having an attachment structure for attachment to the cabinet and a first threaded element extending from the attachment structure; and a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element; the first and second components being configured so that when they are threadedly engaged the driving formation is accessible through the first threaded element; wherein the leg comprises a nominal height member, the nominal height member being located in the threaded path of the first component and/or the second component in a nominal height position such that the nominal height member restricts movement of the first component relative to the second component in a direction away from a nominal height configuration of the leg; the method comprising: attaching the leg to the base in a location such that the second component can be engaged by a tool passing through the hole in the base; positioning the base in a desired installation location; and adjusting the leg by means of a tool passing through the hole.

According to an tenth aspect of the present invention there is provided a method of assembling a cabinet kit, the kit comprising a cabinet base having a hole therethrough and an adjustable leg, the adjustable leg comprising: a first component having an attachment structure for attachment to the cabinet and a first threaded element extending from the attachment structure; and a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element; the first and second components being configured so that when they are threadedly engaged the driving formation is accessible through the first threaded element; the method comprising: attaching the leg to the base in a location such that the second component can be engaged by a tool passing through the hole in the base; positioning the base in a desired installation location; and adjusting the leg by means of a tool passing through the hole.

In some embodiments, the adjusting step may be performed whilst the leg is engaged with a floor.

In some embodiments, the kit may be a kit as described in the statements above.

The present invention will now be described by way of example with reference to the accompanying drawings. In the drawings:
Figure 1a schematically illustrates a prior art kitchen cabinet. Figure 1b schematically illustrates a first prior art adjustable leg.
Figure 2 schematically illustrates a second prior art adjustable leg.
Figure 3a schematically illustrates a perspective view of an adjustable leg. Figure 3b schematically illustrates a perspective view of a first component of the adjustable leg. Figure 3c schematically illustrates a perspective view of a second component of the adjustable leg.
Figure 4a schematically illustrates a perspective view from above of the adjustable leg. Figure 4b schematically illustrates a side view of the adjustable leg. Figure 4c schematically illustrates a perspective view from below of the adjustable leg.
Figure 5a schematically illustrates a perspective view from above of a kit of the adjustable leg and a cabinet base. Figure 5b schematically illustrates a perspective view from below of the kit of the adjustable leg and the cabinet base.
Figure 6a schematically illustrates a cross-section view of the adjustable leg. Figure 6b schematically illustrates a cross-section view of the kit of the adjustable leg and the cabinet base.
Figure 7a schematically illustrates a cross-section view of the adjustable leg in a short configuration. Figure 7b schematically illustrates a cross-section view of the adjustable leg in a nominal configuration. Figure 7c schematically illustrates a cross-section view of the adjustable leg in a tall configuration.
Figure 8a schematically illustrates a perspective view of an adjustable leg of a further implementation. Figure 8b schematically illustrates a perspective view of a first component of the adjustable leg of the further implementation. Figure 8c schematically illustrates a perspective view of a second component of the adjustable leg the further implementation. Figure 8d schematically illustrates a top cross-section view of the second component of the adjustable leg of the further implementation.
Figure 9a schematically illustrates a cross-section view of the adjustable leg of the further implementation in a short configuration. Figure 9b schematically illustrates a cross-section view of the adjustable leg of the further implementation in a nominal configuration. Figure 9c schematically illustrates a cross-section view of the adjustable leg of the further implementation in a tall configuration.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

This invention relates to relates to legs, for example for furniture such as cabinets. The legs may be adjustable. The legs may support the cabinet. The cabinet may be a kitchen cabinet, a bedroom cabinet, a bathroom cabinet, a furniture cabinet, and any other form of cabinet. The cabinet may form a piece of furniture.

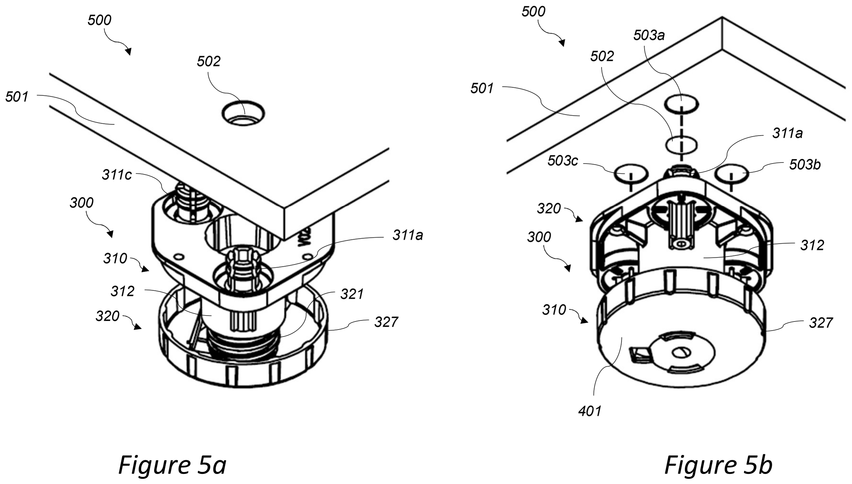

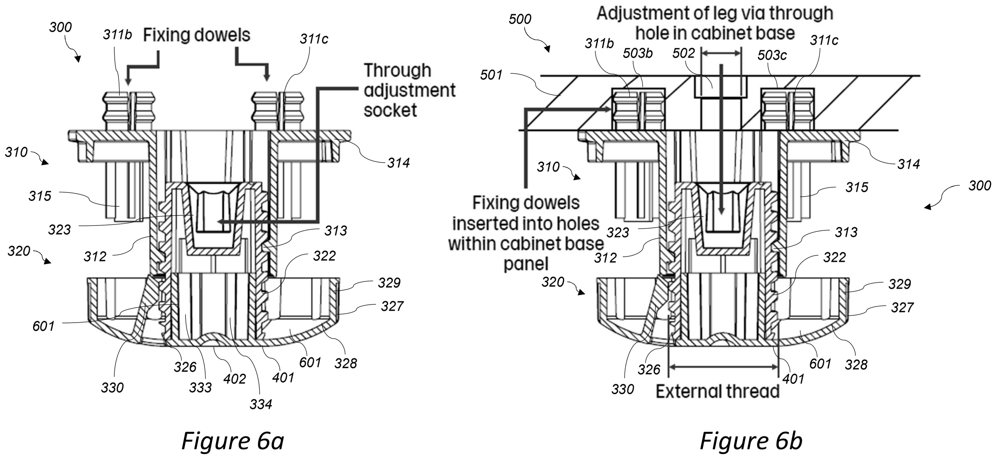

Figures 5a, 5b and 6b show the lower part, or base 501 of a cabinet whose carcass is generally of the type shown in Figure 1a. The cabinet may comprise one or more of the base 501, one or more side walls, a back panel, a top panel and a cabinet door. The side panel may comprise fixing holes to help in attaching hinges to the side panel to support the cabinet door. The base 501, the side walls, the back panel, the top panel and the door may be formed as rigid panel elements. Alternatively, the back panel may be formed as a semi-rigid panel element. The base 501, the side walls, the back panel, the top panel and the door could, for example, be formed of one or more lignocellulosic materials such as chip board, fibre board or hardboard. The materials could be coated on one or more of their major surfaces with a protective or decorative covering such as a laminate, melamine paper, wood veneer or polymer sheet. The base 501, the side walls, the back panel and the top panel could be fixed together with glued wooden dowels, screws, nails or other fixings, adhesive or by means of mechanical interlockings such as tongue and groove joints.

The cabinet may be supported on a floor by a front leg and a rear leg. The positioning of the legs may be as shown by the legs 9, 10 illustrated in Figure 1a. In practice the cabinet could have more legs, for example four legs, so that it can rest stably on the floor. The cabinet will typically have two or more front legs and two or more rear legs. The legs may be arranged in a rectangular pattern when viewed from above. In this example the front and rear legs are identical, although that is not essential. The leg described herein my apply to front, rear, or both types of legs.

A void may be defined between the base 501 of the cabinet and the floor. A kickboard or plinth can close the front of the void. The kickboard can be clipped to the front leg by clips, for instance by the clips making a resilient snap fitting around the leg. In an embodiment of the leg 300 in which the height is reduced, for example for bedroom cabinet legs, the clips may be adapted. The clips may also be shorter to avoid interferences with the shorter leg. The clip may comprise a clip body for attaching to the leg 300 and a clip plate for attaching to the kickboard. The clip plate may comprise one or more holes for receiving attachment means such as screws. The clip body may be thinner for clipping around a shorter leg 300. The clip plate may be shorter to avoid inference with flanges of the leg 300.

The complete cabinet carcass would typically comprise the base 501, two side walls, a back panel and a top panel. Optionally the cabinet may have one or more doors, which could be attached to the side walls by hinges, one or more shelves and/or other accessories.

The other accessories for the cabinet may comprise one or more of: frontals and hinge, a drawer box (internal and externally mounted (with frontal fitted)), frontal handles, integrated sliding and bi-folding mechanisms, push to open mechanisms, decorative panelling and profiles (décor ends, plinth, decorative plinth, cornice, pelmet, corner fillets and joinery skirting and architrave), worktops, internal integrated lighting, electrical integrated appliances, top box cabinets and bridging units that integrate and support off the legged cabinet, and internal accessories, such as: shoe shelves (fixed and pull out), adjustable shelving, pull out locking shelving and worktops, hanging rails (including curved and pull down), trouser rails, tie rails, ironing board storage, mirrors, storage organisation and baskets, drawer organisation, corner storage accessories, pull out storage tower accessories, door balconies and frontal back accessories, and laundry storage (baskets and bins).

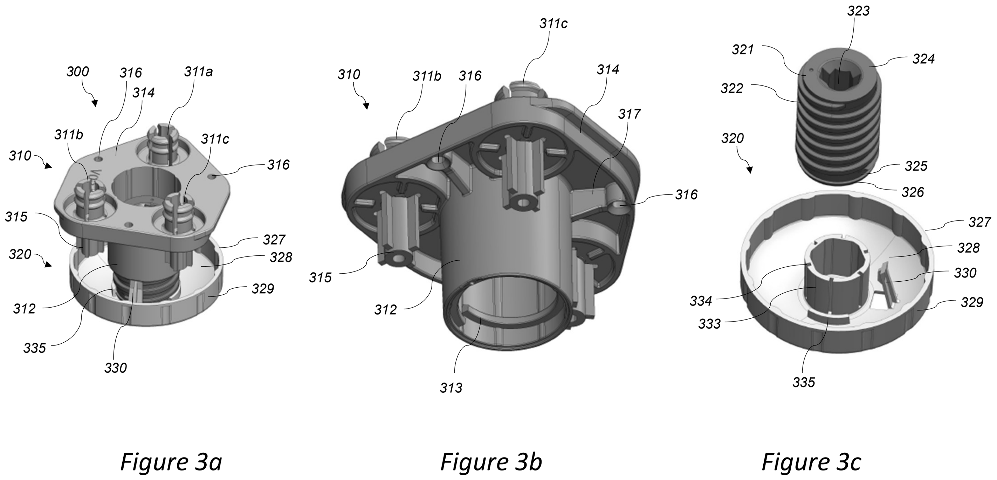

Figures 3a to 7c illustrate the leg 300. The leg 300 may comprise a first component 310 and a second component 320. The first component 310 may be an upper part 310. The second component 320 may be a lower part 320. The upper part 310 may be attachable rigidly to the cabinet. The lower part 310 may engage with the ground. The lower part 320 may be threadedly coupled to the upper part 310 in such a way as to permit the length of the leg 300 to be adjusted by relative rotation of the upper and lower parts 310, 320 about the thread axis.

The upper part 310 of the leg 300 may comprise a fixing plate, or flange, shown generally at 314 and a sleeve 312. The fixing plate 314 and the sleeve 312 may be integral with each other. The fixing plate 314 is intended to facilitate the attachment of the upper part 310 of the leg 300 to the base 501 of the cabinet. The fixing plate 314 may have a planar mating surface which is intended to abut the underside of the base 501.

The upper part 310 may comprise an attachment structure 311. The attached structure 311 may extend from the mating surface in the opposite direction to the sleeve 312. The attachment structure 311 may comprise a plurality of fixing dowels, or more generally lugs, 311a, 311b 311c. The fixing dowels or lugs 311a, 311b 311c can be mated into corresponding holes 503a, 503b, 503c in the base 501 of the cabinet (see Figures 5a, 5c and 6b). This may assist in forming a secure union between the base 501 of the cabinet and the upper part 310 of the leg 300. The lugs 311a, 311b 311c may have ridged or tanged outer formations to resist removal of the lugs 311a, 311b 311c from the holes 503a, 503b, 503c. The lugs 311a, 311b 311c may be hollow along their lengths so that corresponding pins can be knocked / pushed through the base and into the dowels or lugs to resist removal. Screws or pins may also be passed though fixing holes 316 in the fixing plate and screwed into the base 501 of the cabinet.

Additionally, a one or more knock in dowels 315 may be moulded into the first component 310. Once the lugs 311a, 311b 311c are secured into the base panel 501, the dowels may be hit with a tool, such as a hammer, so that the dowels 315 are fitted into a corresponding cavity in the lugs 311a, 311b 311c. This causes the lugs 311a, 311b 311c to expand and to be pressed into the holes 503a, 503b, 503c. The insertion of the dowels 315 into the lugs 311a, 311b, 311c may provide a secure tool free fitting.

The sleeve 312 may be positioned relative to the fixing plate so that the sleeve 312 extends downwardly away from the base 501 of the cabinet when the leg 300 is attached to a cabinet in situ. The sleeve 312 may comprises an outer wall that is generally circularly cylindrical or in the form of a tube. As will be discussed in more detail herein, all of the interior of the sleeve, or at least the central part of the interior of the sleeve, may be hollow and preferably unobstructed from the end of the upper part 310 at which the fixing plate 314 is located. Webs 317 may extend between the fixing plate 314 and the exterior of the sleeve 312 to help maintain the sleeve 312 in a desired attitude relative to the fixing plate 314.

A first threaded element 312 may be provided by the sleeve 312. The first threaded element 312 may comprise a first thread 313. The first thread 313 may be formed in the interior of the sleeve 312. Alternatively, the first thread 313 may be formed on the exterior of the sleeve 312. The first thread 313 may be a helical thread. The first thread 313 may extend through the entirety of the interior length of the sleeve 312. Alternatively, the first thread 313 may exist only at the end of the sleeve 312 most distant from the mating surface 314. In such an embodiment, the remainder of the sleeve 312 may be provided with formations such as radial ribs for helping to stiffen the sleeve 312. The axis of the first thread 313 is preferably perpendicular to the plane of the mating surface 314, but it could be angled relative to the mating surface 314 depending on the design requirements.

The lower part 320 of the leg 300 may comprise a shaft 321 and a foot 327.

The shaft 321 may provide a second threaded element 321. The shaft 321 may comprise a second thread 322. The shaft 321 may be externally threaded 322.

Alternatively, the second thread 322 may be internal in the shaft 321. The second thread 322 may be configured such that the shaft 321 can mate threadedly with the interior first thread 313 of the sleeve 312. The second thread 322 of the shaft 321 may be engageable at a first end 324 with the first thread 313 of the sleeve 312.

The foot 327 may be located at the lower extremity of the lower part 320 of the leg 300. The foot 327 may comprise a base 401 at its lower end. The leg 300 may be supported by the base 401. The outer surface 402 of the base 401 may be formed of a material such as nylon and/or polypropylene which facilitates sliding or rotation of the lower part 320 when it is resting on a floor.

The foot 329 may comprise an adjustment collar 329. The foot 327 and the adjustment collar 329 may be integral. The adjustment collar 329 may provide a surface for a fitter to hold during installation. The adjustment collar 329 may be disposed about the longitudinal axis of the shaft 321. The adjustment collar 329 may have an uneven outer surface, e.g. having ridges or grooves in it, to facilitate gripping of the collar by a fitter. Conveniently the adjustment collar 329 may have a greater diameter than the shaft 321. This may provide a greater moment to the fitter's adjustments, reducing the effort required to turn the adjustment collar 329.

The lower part 320 of the leg 300 may be provided with a driving formation 323 whereby a tool can be engaged with the lower part 320 of the leg 300 to drive it to rotate. The driving formation 323 of the lower part 310 of the leg 300 may be a structure that is of non-uniform radius about the longitudinal axis of the shaft 321. The driving formation 323 may, for example be configured to be engaged by a conventional turning tool such as an Allen key, a screwdriver or a spanner. Thus, the driving formation 323 may comprise a hexagonal socket, a slot, a cross or a hexagonal boss. Alternatively, the driving formation 323 may be configured to be driven by a tool having a nonconventional head shape. In each case the formation 323 may be centred on and disposed about the longitudinal axis of the shaft 321.

The driving formation 323 may be a recess in the shaft 321 itself. The driving formation 323 may be located inboard of the thread 322 of the shaft 321. The driving formation 323 is preferably located in the threaded part 322 of the shaft 321. The driving formation 323 is preferably located so that in directions perpendicular to the thread axis it is surrounded by the second thread 322. The driving formation 323 is preferably located in the upper half of the shaft 321 (i.e. the longitudinal half furthest from the foot 327). At least part of the driving formation is preferably located at (e.g. within 10mm of) the upper end of the shaft 321 (i.e. the end furthest from the foot).

As can be seen from Figures 3a, 4a, 5a, 6a and 6b, when the lower leg part 320 is threaded into the upper leg part 310, the fact that the interior of the sleeve 312 is open and unobscured from the end of the leg 300 opposite the foot 327 means that the driving formation 323 can be accessed from that end of the leg 300. As a result, and as shown in Figure 6b, a tool having a straight shaft can be inserted through the upper part 310 of the leg 300 and engaged with the driving formation 323. This allows the lower part 320 of the leg 300 to be rotated with respect to the upper part 310 of the leg 300 without the lower part 310 of the leg 300 being manually gripped, even when the leg 300 is on the floor and under load.

In order to permit the tool to pass into the leg 300 from above, the base 501 of the cabinet is provided with an access hole 502. The access hole 502 passes through the base 501. This means that the tool can be inserted into the leg 300 from the interior of the cabinet and engaged with the driving formation 323. The access hole 502 is in predetermined registration with the blind holes 503a, 503b, 503c in the underside of the base 501 in which the lugs 311a, 311b, 311c are inserted, so that when the upper part 310 of the leg 300 is attached to the base 501 with the lugs 311a, 311b, 311c located in their blind holes 503a, 503b, 503c the access hole 502 is aligned with the driving formation 323. This arrangement means that an installer does not need to reach into the void under the cabinet to adjust the leg 300 - instead they can insert a tool into the leg 300 from the interior of the cabinet and adjust the leg by means of that tool.

The lugs 311a, 311b, 311c make it easier for an installer to get the through-hole 502 in the cabinet base aligned with the driving formation 323. When there are two or more lugs 311a, 311b, 311c, by suitable positioning of the holes 503a, 503b, 503c into which the fixing lugs 311a, 311b, 311c are to be inserted, the upper part 310 of the leg 300 can be assured of being in the appropriate location relative to the through-hole 501 when the lugs 311a, 311b, 311c are inserted in the holes. When there are three or more lugs 311a, 311b, 311c, by suitable positioning of the holes into which the lugs are to be inserted, the upper part 310 of the leg can be assured of being in a desired orientation about a vertical axis when the lugs 311a, 311b, 311c are inserted in the holes 503a, 503b, 503c. If more lugs 311a, 311b, 311c are provided and there is a snug fit between the lugs 311a, 311b, 311c and the holes 503a, 503b, 503c then more force may be required to attach the upper leg part to the cabinet base. Therefore, having exactly two or three such lugs is preferred.

If the lugs 311a, 311b, 311c are omitted then it could be left to an installer to position a leg under the respective access hole so that the interior of the leg is accessible from through the base 501. If the leg 300 is to be screwed to the base, e.g. using holes 316, guide marks could be provided on the underside of the base 501, in registration with the access hole 502, to indicate to the installer where to insert the screws into the base for proper alignment of the leg 300 with the access hole 502. The guide marks could be indentations or printed indicia.

When the lugs 311a, 311b, 311c are in the form of dowels they may be configured to fit snugly into the corresponding holes 503a, 503b, 503c in the base 501 so as to resist removal.

The pitch of the thread formed in the leg 300 is preferably sufficiently short that when the leg 300 is loaded longitudinally friction in the thread will prevent it from turning under that load.

In the arrangement of Figure 3a, the shaft 321 of the lower part 310 is relatively broad. This means that the leg 320 as a whole can be relatively stable, especially when the cabinet is loaded. Conveniently the external diameter of the second thread 322 of the lower leg is greater than 2.0 times, greater than 2.5 times or greater than 3.0 times the diameter of the driving formation 323. In this context the driving formation 323 may be defined as the formation 323 having circumferentially-directed walls adapted for engagement with a driving tool, for example a raised or recessed hexagon, slot, star or cross.

Preferably the diameter of the shaft 321 is greater than the diameter of the through hole 502. This can help prevent the leg 300 being inadvertently retracted into the cupboard void. Conveniently the external diameter of the second thread 322 is greater than 2.0 times, greater than 2.5 times or greater than 3.0 times the diameter of the through hole 502. The shaft 321 may be hollow. The exterior wall of the shaft 321 may carry the male second thread 322. Within that wall may be a void. This means that the weight of the leg 300 can be reduced.

It is preferred that the walls of the sleeve 312, on whose interior surfaces the female first thread 313 may be formed, extend in a direction parallel with the thread axis from the region where the female thread 313 is provided to the base-facing upper surface of the leg upper part 310. This means that vertical load can be passed from the lower part 320 of the leg 300 directly on to the lower surface of the base 501 when the leg upper part 310 is installed on the base 501, and may help to inhibit flexing of the walls in comparison to designs in which those walls span in a direction some extent transverse to the thread axis. Preferably, the walls of the sleeve 312 form a single integral component. Preferably that component is integral with the lugs 311a, 311b, 311c.

Preferably the leg 300 has a single threaded engagement between the part of the leg that is or is configured to be fast with the cabinet base (310 in the example of Figure 3a) and the floor-engaging part of the leg (320 in the example of Figure 3a).

In the examples given herein, the lower part 320 of the leg 300 is inserted into the upper part 310 of the leg 300. Alternatively, the upper part 310 of the leg could carry the male thread and could be inserted into the lower part 320 of the leg which would carry the female thread. If the lower part 320 of the leg 300 carries the female thread, the male thread may be formed on a member that has a longitudinal through-bore through which a driving formation 323 on the lower leg part 320 can be accessed for driving the lower leg part 320 to rotate.

The first and second leg parts 310, 320 may be each formed as respective integral parts, for example by injection moulding, or they may be assembled from sub-parts. The female threaded part, that is sleeve 312 in the arrangement of Figure 3a, may preferably have not more than a single turn of thread 313. There is preferably not more than one thread crest along any line parallel with the thread axis. This can make it easier to mould the internally threaded part 312 because internal formers defining the interior of the thread 313 can be removed without turning to disengage them from the thread.

In a first specific embodiment, the second threaded element, the shaft 321, may be releasably engageable with the foot 327. The lower part 320 of the leg 300 may comprise a mounting structure 326, 333, 334, 335. The shaft 321 may be releasably engageable with the foot 327 through the mounting structure 326, 333, 334, 335. The mounting structure 326, 333, 334, 335 may connect the shaft 321 to the foot 327. The mounting structure 326, 333, 334, 335 may restrict displacement of the shaft 321 from the foot 327. The mounting structure 326, 333, 334, 335 may prevent rotation of the shaft 321 relative to the foot 327.

The mounting structure 326, 333, 334, 335 may comprise a snap-fitting. The mounting structure 326, 333, 334, 335 may comprise a lip 326 and a clip 335. The clip 335 may be engageable with the lip 326 so as to restrict displacement of the shaft 321 from the foot 327. The lip 326 / clip 335 structure may not prevent the shaft 321 from being removed from the foot 327, but it may increase the force required to separate the components. The lip 326 may be located on the shaft 321. The clip 335 may be located on the foot 202. Alternatively, the lip 326 and the clip 335 may be located on the opposite components.

The lip 326 may protrude from the shaft 321. The lip 326 may be located at the second end 325 of the shaft 321 proximal to the foot 327. The lip 326 may extend around at least part of the perimeter of the second end 325 of the shaft 321, such as an arc. The lip 326 may extend around the perimeter of the second end 325 of the shaft 321. The perimeter may extend around the thread axis. By extending around the entire perimeter of the shaft 321, the lip 326 may be engaged by the foot 327 in any rotational orientation of the shaft 321 relative to the foot 327. The lip 326 may comprise a square, triangular, semicircular or tooth/hook cross-section. Figures 6a and 6b show a tooth/hook cross-section. This structure may provide a greater force to release than to engage the shaft 321 to the foot 327. Put another way, it may be easier to attach the shaft 321 to the foot 327 than to release the shaft 321 from the foot 327. There may be a plurality of lips 326. The lips 326 may be adjacent to one another. The lips 326 may be on top of one another up the shaft 321.

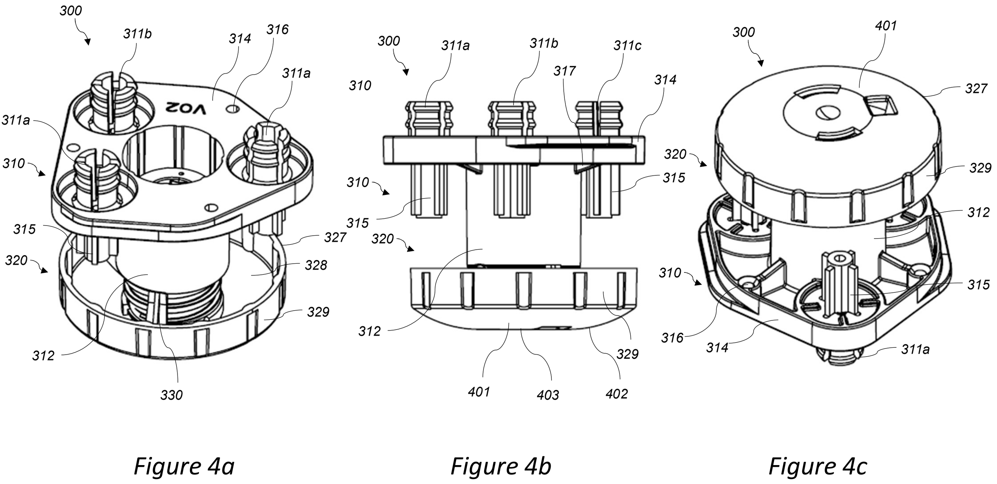

The clip 335 may protrude from the foot 327. The clip 335 may be located on the foot 327. The clip 335 may be located on an inner surface 328 of the foot 327. The clip 335 may extend upwards from the inner surface 328 of the foot 327. The clip 335 may extend around at least part of the perimeter of the second end 325 of the shaft 321, such as an arc. The clip 335 may form the shape of an arc. The clip 335 may extend around the perimeter of the second end 325 of the shaft 321. The perimeter may extend around the thread axis. By extending around the entire perimeter of the shaft 321, the clip 335 may be engaged by the shaft 321 in any rotational orientation of the shaft 321 relative to the foot 327. The clip 335 may comprise a square, triangular, semicircular or tooth/hook void in the cross-section. The lip 326 may fit into the void of the clip 335. Figures 6a and 6b show a tooth/hook cross-section. This structure may provide a greater force to release than to engage the shaft 321 to the foot 327. Put another way, it may be easier to attach the shaft 321 to the foot 327 than to release the shaft 321 from the foot 327. There may be a plurality of clips 335. The clips 335 may be placed circumferentially around the thread axis. For example, as shown in Figures 3c and 4c, two clips 335 may be located on opposite sides of the shaft 321.

The mounting structure 326, 333, 334, 335 may comprise a first splined portion 601 and a second splined portion 334. The second splined portion 334 may be engageable with the first splined portion 601 so as to prevent rotation of the shaft 321 relative to the foot 327. The first splined portion 601 / second splined portion 334 structure may not prevent the shaft 321 from being removed from the foot 327, but it may prevent rotation of the components. The first splined portion 601 and second splined portion 334 may have a tight, or interference, fit. The tight fit first splined portion 601 / second splined portion 334 structure may not prevent the shaft 321 from being removed from the foot 327, but it may increase the force required to separate the components. The first splined portion 601 may be located on the shaft 321. The second splined portion 334 may be located on the foot 202. The second splined portion 334 may be inserted into the first splined portion 601. Alternatively, the first splined portion 601 and the second splined portion 334 may be located on the opposite components.

The first splined portion 601 may be located inside of the shaft 321. In this way, more space may be provided for the thread 322 outside of the shaft 321. This allows the shaft 321 to be shorter, providing a more compact leg. The first splined portion 601 may be located at the second end 325 of the shaft 321 proximal to the foot 327. The first splined portion 601 may extend around the thread axis inside of the shaft 321. Individual splines of the first splined portion 601 may be spaced around the thread axis. The splines may comprise a square, triangular, or semicircular cross-section. Alternatively, the spline may be located on the outside of the shaft 321.

The second splined portion 334 may protrude from the foot 327. The second splined portion 334 may be located on the foot 327. The second splined portion 334 may be located on a protrusion 333 of the foot 327. The protrusion 333 may protrude into the shaft 321 during engagement of the shaft 321 to the foot 327. The protrusion 333 may extend from the inner surface 328 of the foot 327. The protrusion 333 may be hollow so as to reduce the weight of the leg 300. The protrusion 333 may be in the form of tube with a circular cross-section. The protrusion 333 may extend into a corresponding recess in the shaft 321. The second splined portion 334 may extend around the thread axis inside of the shaft 321. Individual splines of the second splined portion 334 may be spaced around the thread axis. The splines may comprise a square, triangular, or semicircular cross-section. The splines of the foot 327 are configured to engage the splines of the shaft 321. There may be three or more splines. Alternatively, the spline may be located on the inside of the foot 327.

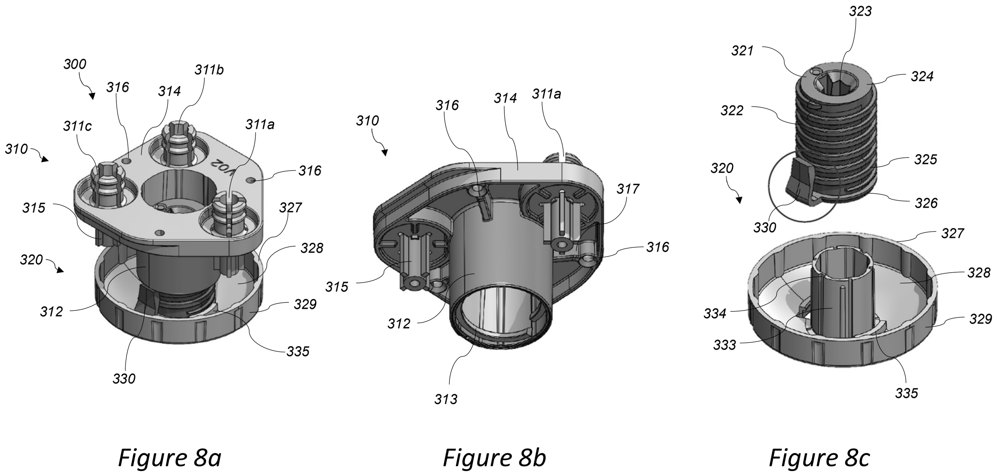

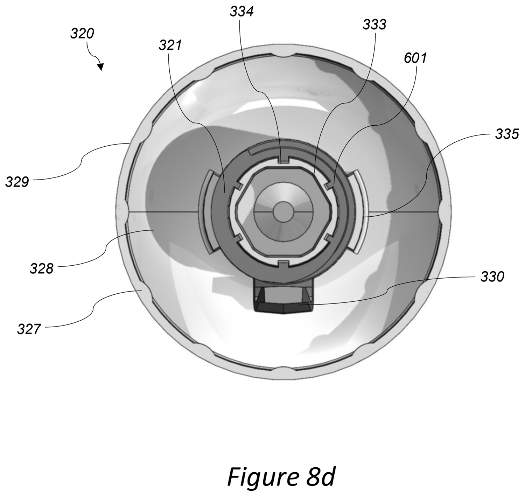

As described herein, the first splined portion 601 may be located on the shaft 321 and the second splined portion 334 may be located on the foot 327. The first splined portion 601 and the second splined portion 334 may have complimentary structures so that they are engageable with one another. The first splined portion 601 and the second splined portion 334 may have the same order of symmetry. The order of symmetry may be the rotational order of symmetry about the shaft 321 axis. The order of symmetry may determine how many different orientations the first splined portion 601 can engage with the second splined portion 334. For example, if the order of symmetry is six (as illustrated in Figure 3c), then the first splined portion 601 and the second splined portion 334 can engage in six different rotational orientations. If the order of symmetry is two (as illustrated in Figure 8d), then the first splined portion 601 and the second splined portion 334 can engage in two different rotational orientations.

In an implementation of the first specific embodiment, as illustrated in Figures 3a to 7c, the first splined portion 601 and the second splined portion 334 may have the same order of symmetry as the number of individual splines. For example, the first splined portion 601 and the second splined portion 334 may each have six individual splines and an order of symmetry of six. This may allow the first splined portion 601 and the second splined portion 334 to engage in any orientation in which the individual splines are aligned.

Alternatively, in a further implementation of the first specific embodiment, as illustrated in Figures 8a to 9c, the first splined portion 601 and the second splined portion 334 may have a different order of symmetry as the number of individual splines of the first splined portion 601 and/or the second splined portion 334. In particular, the first splined portion 601 and/or the second splined portion 334 may have a lower order of symmetry to the number of individual splines. As shown most clearly in Figure 8d, the first splined portion 601 and the second splined portion 334 have an order of symmetry of two. This means the first splined portion 601 and the second splined portion 334 can only be engaged in two rotational orientations, 180 degrees apart. This order of symmetry is lower than the six individual splines. This may be provided by a 'poka yoke' arrangement. This can ensure that the first splined portion 601 and the second splined portion 334 only engage in the correct orientation(s). In particular, if the nominal height member 330 is attached to the shaft 321, this can ensure that the nominal height member 330 is only located on the sides where there is not a clip present 335 (described in more detail herein with reference to the nominal height member 330). This can avoid the nominal height member 330 interfering with the clip(s) 335.

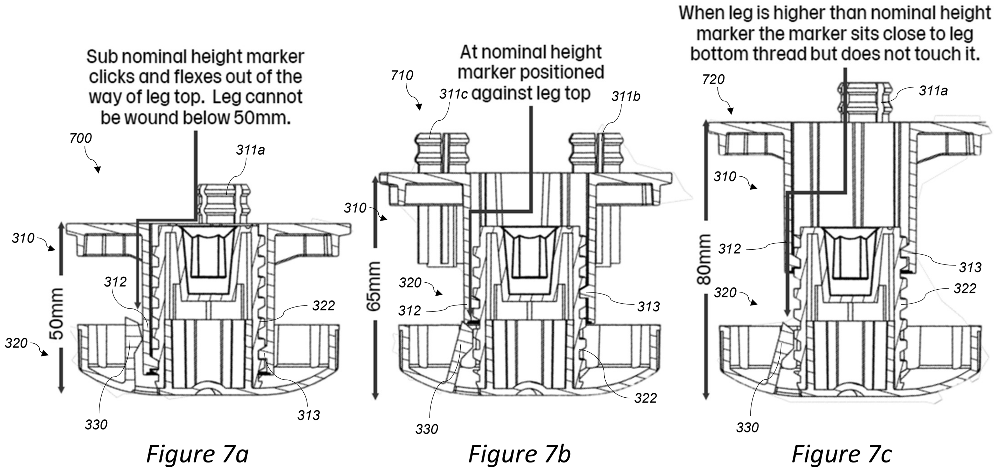

In a second specific embodiment, the leg 200 may comprise a nominal height member 330. The nominal height member 330 may be arranged to provide an indication to the fitter that the leg 300 is in a nominal height configuration 710. Figure 7b illustrates the nominal height configuration 710. The nominal height configuration 710 may be the standard height for the leg 300 in a normal cabinet fitting. The nominal height of the leg 300 may be between 55mm and 75mm, preferably 65mm. The nominal height may be varied by changing the arrangement, such as the size or position, of the nominal height member 330.

The nominal height member 330 may be located in the threaded path of the upper part 310 or the threaded path of the lower part 320. The threaded path may be the path that the upper or lower part 310, 320 travel during threaded engagement. Put another way, if the upper and lower parts 310, 320 are rotated relative to one another along the thread, the nominal height member 330 will be in the path and will contact the upper or lower part 310, 320 at some point along the threaded path. When the movement of the upper part 310 relative to the lower part 320 is in a direction away from the nominal height configuration 710, the nominal height member 330 may restrict the movement of the of the upper part 310 relative to the lower part 320. Put another way, because the nominal height member 330 is in the threaded path of the upper part 310 or the threaded path of the lower part 320, the nominal height member 330 will contact the upper part 310 or the lower part 320 when the parts 310, 320 are moved relative from one another away from the nominal height configuration 710. This contact will cause restriction on the movement. The restriction on the movement can be felt by the fitter, which will indicate that the leg 300 is in the nominal height configuration 710.

Taking Figure 7b as an example, the leg 300 is in the nominal height configuration 710. If the upper part 310 is rotated so that it moves downwards, the upper part 310 will contact the nominal height member 330, which will restrict the movement. This will indicate to the fitter than the leg 300 is in the nominal height configuration 710.

However, if the upper part 310 is rotated so that it moves upwards, the upper part 310 will not contact the nominal height member 330, which will not restrict the movement. This will indicate to the fitter than the leg 300 is not in the nominal height configuration 710.

Referring to Figures 7a and 7c, the leg 300 may further comprise a short configuration 700 and/or a tall configuration 720. In the short configuration 700, the upper part 310 may be closer to the lower part 320 than in the nominal configuration 710. The short height of the leg 300 may be between 45mm and 55mm, preferably 50mm. In the tall configuration 720, the upper part 310 may be farther from the lower part 320 than in the nominal configuration 710. The tall height of the leg 300 may be between 75mm and 85mm, preferably 80mm. The leg 300 may have a working range between 50mm and 80mm. The leg 300 may physically be restricted from going below 50mm. Above 80mm, the threads may not be sufficiently engaged to provide the required strength.

The leg 300 may comprise further configurations. For example, there may be a plurality of short configurations 700 (in which the upper part 310 is closer to the lower part 320 than in the nominal configuration 710), and/or there may be a plurality of tall configurations 720 (in which the upper part 310 is farther from the lower part 320 than in the nominal configuration 710). There may be a plurality of nominal configurations 710, such as being provided by a plurality of nominal height members 330.

The nominal height member 330 may be arranged such that movement of the upper part 310 relative to the lower part 320 in a direction away from the nominal height configuration 710 towards the short configuration 700 is restricted by the nominal height member 330. This is due to the nominal height member 330 impeding the movement of the upper part 310 as it travels downwards. The nominal height member 330 may be arranged such that movement of the upper part 310 relative to the lower part 320 in a direction away from the nominal height configuration 710 towards the tall configuration 720 is not restricted by the nominal height member 330. This is due to the nominal height member 330 not impeding the movement of the upper part 310 as it travels upwards. Alternatively, the nominal height member 330 may be arranged to restrict movement towards the tall configuration 720 and not restrict movement towards the short configuration 700.

The nominal height member 330 may be in the threaded path of the upper part 310. The nominal height member 330 may be in the threaded path of the sleeve 312. The nominal height member 330 may be located outboard of the thread 322 of the shaft 321. In this way, the nominal height member 330 may restrict the movement of the sleeve 312 without interfering with the thread 322.

The nominal height member 330 may extend from the foot 327 towards the upper part 310 along a side of the thread 322 of the shaft 312 to the nominal height position. The nominal height member 330 may extend parallel to the thread axis up the side of the shaft 312. Alternatively, as shown in Figure 3c, the nominal height member 330 may angle inwards towards the shaft 312 up the side of the shaft 312. The angle may provide space for deflection of the nominal height member 330. In the nominal height configuration 710 of the leg 300, the upper part 310 may contact the nominal height member 330. Specifically, the sleeve 312 may contact the nominal height member 330. The sleeve 312 may rest on the nominal height member 330.

In the short configuration 700 of the leg 300, the nominal height member 330 may be pushed out of the path of the upper part 310. The nominal height member 330 may be pushed outboard of the upper part 310 by the upper part 310. The sleeve 312 may push the nominal height member 330 outboard. The sleeve 312 may push the nominal height member 330 outboard by pushing in between the shaft 321 and the nominal height member 330. The angle of the nominal height member 330 may provide space for the nominal height member 330 to flex outboard. The force required to push the nominal height member 330 outboard may restrict the movement of the upper part 310. The restriction may be felt by the fitter and indicate that the leg 300 is no longer in the nominal configuration 710. During the transition between the nominal configuration 710 and the short configuration 700, the sleeve 312 may push in between the shaft 321 and the nominal height member 330, pushing the nominal height member 330 outboard and down the side of the sleeve 312. The nominal height member 330 may comprise a sloped top so as to aid the guidance of the nominal height member 330 outboard by the sleeve 312. As shown in Figure 6a, the nominal height member 330 top is sloped downwards towards the shaft 321. The nominal height member 330 may be made from a flexible material and/or configuration so as to permit the nominal height member 330 being pushed outboard.

In the tall configuration 720 of the leg 300, the nominal height member 330 may not be contacted by the upper part 310. The transition from the nominal configuration 710 to the tall configuration 720 may not be restricted by the nominal height member 330. The fitter may feel that there is no restriction on the movement, which indicates that the leg is moving from the nominal configuration 710 to the tall configuration 720. Alternatively, the nominal height member 330 may provide restriction between the nominal configuration 710 and the tall configuration 720, and no restriction between the nominal configuration 710 and the short configuration 700.

During transition from the nominal configuration 710 to the other configuration in which restriction is provided by the nominal height member 330 (the short configuration in Figure 7a), a sound may be generated. The pushing of the nominal height member 330 outboard may cause a sound to be generated, such as a click. The sound may be caused by the nominal height member 330 contacting another part of the leg 300. In addition to the increase in restriction force on the fitter, the sound generated may provide a further indication that the leg 300 is no longer in the nominal configuration 710.

The nominal height member 330 may be integral with a component of the lower part 320. As described herein, the lower part 320 may comprise the shaft 321 and the foot 327. As described herein, with reference to the first specific embodiment, the shaft 321 may be releasably engageable with the foot 327. Alternatively, the shaft 321 and the foot 327 may be integral with one another. As illustrated in Figures 3a to 7c, the nominal height member 330 may be integral with the foot 327. Alternatively, in a further implementation of the second specific embodiment, as illustrated in Figures 8a to 9c, the nominal height member 330 may be integral with the shaft 321.

In the implementation, illustrated by example in Figures 3a to 7c, the nominal height member 330 may be part of the foot 327. As described herein generally, the nominal height member 330 may extend from the foot 327 towards the upper part 310 along a side of the thread 322 of the shaft 312 to the nominal height position. In this particular implementation, the nominal height member 330 may protrude from the foot 327. The nominal height member 330 may protrude from an inner surface 328 of the foot 327. The nominal height member 330 may protrude from the foot 327 in a direction towards the upper part 310. The base of the nominal height member 330 may be at the inner surface 328 of the foot 327 and the top of the nominal height member 330 may be at the nominal height position. The nominal height member 330 may be formed as a part of the foot 327.

In the further implementation, illustrated by example in Figures 8a to 9c, the nominal height member 330 may be part of the shaft 321. As described herein generally, the nominal height member 330 may extend from the foot 327 towards the upper part 310 along a side of the thread 322 of the shaft 312 to the nominal height position. In this particular implementation, the nominal height member 330 may protrude from the shaft 321 (such as at the foot 327 end of the shaft 321). The nominal height member 330 may protrude from the base of the shaft 321. The nominal height member 330 may protrude from the shaft 321 in a direction away from the shaft 321 axis and then upwards towards the upper part 310. The nominal height member 330 may form an 'L' shape. The base of the nominal height member 330 may be at the base of the shaft 321 and the top of the nominal height member 330 may be at the nominal height position. The nominal height member 330 may be formed as a part of the shaft 321. This may provide a simpler manufacturing process, particularly for the foot 327 as the complexity of the foot 327 may be reduced. Put another way, the complex structures may be spread between the foot 327 and shaft 321 components - the foot 327 having the clips 335 and the shaft 321 having the nominal height member 330. Spreading the complex structures can avoid one component being particularly complicated to manufacture. This can allow injection moulding to be more easily used for all components, potentially reducing the need for further processing after the injection moulding.

The nominal height member 330 may be located such that it is not on a side of the shaft 321 which faces the one or more clips 335. The constraining of the location of the nominal height member 330 with respect to the clips 335 may be provided by the order of symmetry of the first splined portion 601 and the second splined portion 334 (as described herein). This can avoid interference between the shaft 321 and the clips 335. For example, the clips 335 may be 90 degree apart from the nominal height member 330.

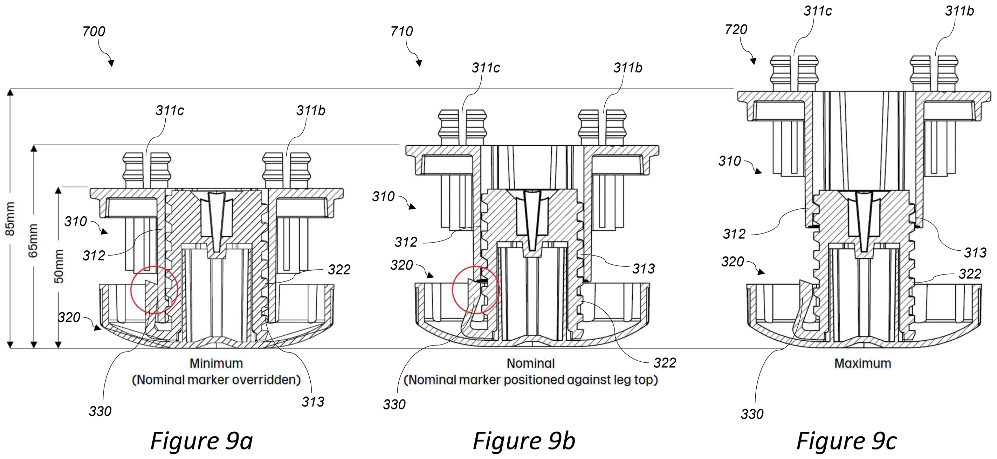

The configurations 700, 710, 720 of the further implementation (as shown in Figures 9a to 9c) may be the same as for the implementation (as shown in Figures 7a to 7c). The top of the nominal height member 330 may interact with the upper part 310 in the same way as described herein with reference to Figures 7a to 7c.

In a third specific embodiment, the foot 327 may comprise a base 401. The base 401 may be the part of the leg 300 which supports the leg 300 on a working surface. For example, the base 401 may be the component which contacts the working surface, e.g., the ground. The foot 327 may also comprise the adjustment collar 329. The base 401 may span the inside of the adjustment collar 329. If the adjustment collar 329 comprises a toroidal rim, the base 401 may span the rim 329. The base 401 may span the bottom of the rim. The base 401 may be generally perpendicular to the rim 329. The connection between the base 401 and the rim 329 may be at an angle. The rim 329 may extend generally parallel to the shaft 321 and/or the thread 322 axis. The base 401 may comprise an inner surface 328. The inner surface 328 may face the cabinet. The base 401 may comprise an outer surface 402. The outer surface 402 may contact the ground in use. The outer surface 402 may face the ground and face away from the cabinet.

The outer surface 402 of the base 401 may extend from its lowest point 403 to the adjustment collar 329. The outer surface 402 of the base 401 may extend uninteruptably from its lowest point 403 to the adjustment collar 329. Put another way, along a cross-sectional line of the base 401 between the lowest point 403 and the adjustment collar 329, the base 401 may not comprise any corners. The base 401 may be curved along the line between the lowest point 403 and the adjustment collar 329.

The line may comprise a gradually increasing or decreasing gradient, without any step changes in gradient. The base 401 may be uninterrupted along any line between the lowest point 403 and the adjustment collar 329. Put another way, the entire base 401 may be curved. However, as shown in Figure 4c, the base 401 may comprise certain sections which are interrupted (due to the fitting of the clips 335 and the nominal height member 330). Having generally uninterrupted base 401 may provide a smooth surface for the base 401 to slide over the ground, such as carpet. This may reduce the effort required by the fitter to put the cabinet into place.

The outer surface 402 of the base 401 may comprise a domed shape. The outer surface 402 may be generally convex. The base 401 itself may also form a domed shape. The inner surface 328 may also follow the domed shape. The inner surface 328 may be generally concave. The domed shape may provide good resistance to imperfections in the ground, such as bumps, when the leg 300 is being slid over the ground. For example, the slope of the dome may allow the leg 300 to slide over bumps without catching.

The base 401 may form a circle when viewed from above. The diameter of the base 401 may be larger than the diameter of the shaft 321. The diameter of the base 401 may be larger than the diameter of the thread 322 of the shaft 321. In particular, the diameter of the base 401 may be at least twice the diameter of the thread 322 of the shaft 321. The larger base 401 diameter may provide a more stable leg 300.

In a fourth specific embodiment, the foot 327 may comprises the base 401. The base 401 may be as described with reference to the third specific embodiment. The foot 327 may form a cup. The cup may be defined by the inner surface 328 of the base. The cup 601 is illustrated in Figure 6a. The cup 601 may be the void formed in the region enclosed by the inner surface 328. In the case of the current design, the cup 601 is curved. The cup 601 may extend up until the lower part of the adjustment collar 329 (see Figure 6a). The sleeve 312 may be receivable into the cup 601. The sleeve 312 may be receivable into the cup 601 when the sleeve 312 is threadedly engaged with the shaft 321. Put another way, there is at least one position of the sleeve 312 on its threaded path in which the sleeve 312 is at least partially located in the cup 601.

There may also be least one position of the sleeve 312 on its threaded path in which the sleeve 312 is not located in the cup 601. In this way, the sleeve 312 may be able to get close to the ground, reducing the overall height of the leg 300. This may provide a greater range of travel for the leg 300, meaning the leg 300 can be used for low configuration uses, such as bedroom cabinets.

The sleeve 312 may be contactable with the inner surface 328 of the base 401. At the sleeves 312 lowest point of travel along the threaded path, the sleeve 312 may contact the inner surface 328 of the base 401. Otherwise, the sleeve 312 may not contact the inner surface 328 on its threaded path. In this way, the maximum amount of travel for the leg 300 may be provided. Preferably, the thickness of the base 401 is also minimised, so as to provide a greater range of travel for the leg 300.

During travel towards the base 401, the sleeve 312 may pass through the adjustment collar 329. In particular, if the adjustment collar 329 forms a toroidal rim, the sleeve 312 may pass through the inside of the rim. As the sleeve 312 is not impeded by the adjustment collar 329, the range of travel of the leg 300 may be further increased.

The four specific embodiments described herein may each be combined with one or more of the other embodiments.

The cabinet base may have a front. The front may be distinguished from the rear in the manners known to cabinet assemblers: for example, by being fitted on its face with a cosmetic coating such as melamine paper, or by being at the opposite end of the base from an end of the base that is adapted to receive a rear face of the cabinet.

It is especially convenient if the cabinet is provided with through-holes 502 through which the rear cabinet leg(s) 300 can be accessed, because rear legs 300 are more difficult to reach through the void. In one arrangement, through-holes 502 may be provided for accessing each rear cabinet leg 300, but no through-holes 502 are provided for accessing each front cabinet leg 300. Thus, the upper surface of the base is intact over the front cabinet leg(s). The front cabinet legs 300 would then be adjusted through the void. This means that the floor of the cabinet can be smooth at the front of the cabinet, where it tends to be more frequently accessed by a user. Alternatively, through-holes 502 could be provided for both front legs 300. In particular, for bedroom cabinets with shorter legs 300, it can also be difficult to access the front legs 300, and so through-holes 502 may be provided for the front legs 300. The through-holes 502 could be covered by caps when the cabinet has been installed.

The cabinet could be closed with a door, with drawers, could be intended to be left open or could be intended to house an appliance. In the examples given above the leg is used on a kitchen cabinet. The leg could alternatively be used on other furniture, including bedroom and workshop cabinets, on appliances, or for levelling structures such as floors. One or more parts of the cabinet (e.g. the base) may be supplied together with one or more legs as a kit. In the examples given above the leg is installed vertically to support the cabinet. The leg could alternatively be used to space the cabinet in any direction from any adjoining structure.

The cabinet may be provided in a kit comprising the base and one or more a first side face, a second side face and a rear face. In kit form the base may be unassembled from one or more of the said faces. The faces may all be of generally planar form. They may be packaged positioned adjacent each other, in a so-called flat pack.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description, it will be evident to a person skilled in the art that various modifications may be made within the scope of the invention.

The following statements form part of the description:
1. An adjustable leg for supporting a cabinet, the leg comprising:
   a first component having an attachment structure for attachment to the cabinet and a first threaded element extending from the attachment structure; and
   a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
   the first and second components being configured so that when they are threadedly engaged the driving formation is accessible through the first threaded element;
   wherein the second component comprises a mounting structure, the second threaded element being releasably engageable with the foot through the mounting structure.
2. A leg as stated in statement 1, wherein the mounting structure comprises:
   a lip protruding from the second threaded element; and
   a clip protruding from the foot, the clip being engageable with the lip so as to restrict displacement of the second threaded element from the foot.
3. A leg as stated in statement 2, wherein the lip extends around the perimeter of the second end of the second threaded element.
4. A leg as stated in statement 2 or 3, wherein the clip extends around an arc of at least part of the perimeter of the second end of the second threaded element.
5. A leg as stated in statement 4, wherein the mounting structure comprises a plurality of clips.
6. A leg as stated in any preceding statement, wherein the mounting structure comprises:
   a first splined portion located on the second threaded element; and
   a second splined portion located on the foot, the second spline portion being engageable with the first splined portion so as a prevent rotation of the second threaded element relative to the foot.
7. A leg as stated in statement 6, wherein the first splined portion is located inboard of the thread of the second threaded element, and the second splined portion is located on a protrusion of the foot that protrudes into the first splined portion.
8. A leg as stated in statement 6 or 7, wherein the first splined portion and the second splined portion have the same order of symmetry as the number of individual splines of the first splined portion and the second splined portion.
9. A leg as stated in statement 6 or 7, wherein the first splined portion and the second splined portion have a different order of symmetry to the number of individual splines of the first splined portion and/or the second splined portion.
10. A leg as stated in statement 9, wherein the first splined portion and the second splined portion have a lower order of symmetry to the number of individual splines of the first splined portion and/or the second splined portion.
11. An adjustable leg for supporting a cabinet, the leg comprising:
   a first component having an attachment structure for attachment to the cabinet and a first threaded element extending from the attachment structure; and
   a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
   the first and second components being configured so that when they are threadedly engaged the driving formation is accessible through the first threaded element;
   wherein the leg comprises a nominal height member, the nominal height member being located in the threaded path of the first component and/or the second component in a nominal height position such that the nominal height member restricts movement of the first component relative to the second component in a direction away from a nominal height configuration of the leg.
12. A leg as stated in statement 11, wherein the leg further comprises:
   a short height configuration in which the first component is closer to the second component than in the nominal height configuration; and
   a tall height configuration in which the first component is farther from the second component than in the nominal height configuration.
13. A leg as stated in statement 12, wherein the leg is configured such that:
   movement of the first component relative to the second component in a direction away from the nominal height configuration towards the short configuration is restricted by the nominal height member; and
   movement of the first component relative to the second component in a direction away from the nominal height configuration towards the tall configuration is not restricted by the nominal height member.
14. A leg as stated in any of statements 11 to 13, wherein the nominal height member is located outboard of the thread of the second threaded element and in the threaded path of the first component.
15. A leg as stated in statement 14, wherein the nominal height member extends from the foot towards the first component along a side of the thread of the second threaded element to the nominal height position.
16. A leg as stated in statement 15, wherein, in the nominal height configuration of the leg, the first component rests on the nominal height member.
17. A leg as stated in statement 15 or 16 when dependent on statement 14, wherein, in the short height configuration, the nominal height member is pushed outboard of the first component by the first component.
18. A leg as stated in any of statements 11 to 17, wherein the nominal height member is integral with the foot.
19. A leg as stated in any of statements 11 to 17, wherein the nominal height member is integral with the second threaded element.
20. A leg as stated in any of statements 11 to 19, wherein the second threaded element is releasably engageable with the foot.
21. An adjustable leg for supporting a cabinet, the leg comprising:
   a first component having an attachment structure for attachment to the cabinet and a first threaded element extending from the attachment structure; and
   a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
   the first and second components being configured so that when they are threadedly engaged the driving formation is accessible through the first threaded element;
   wherein the foot comprises a base for supporting the leg on a working surface and an adjustment collar, an outer surface of the base extending uninteruptably from a lowest point of the base to the adjustment collar.
22. A leg as stated in statement 21, wherein the base forms a domed shape.
23. A leg as stated in statement 21 or 22, wherein the diameter of the base is larger than the diameter of the thread of the second threaded element.
24. A leg as stated in statement 23, wherein the diameter of the base is at least twice the diameter of the thread of the second threaded element.
25. An adjustable leg for supporting a cabinet, the leg comprising:
   a first component having an attachment structure for attachment to the cabinet and a first threaded element extending from the attachment structure; and
   a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
   the first and second components being configured so that when they are threadedly engaged the driving formation is accessible through the first threaded element;
   wherein the foot comprises a base for supporting the leg on a working surface, the foot forming a cup defined by an inner surface of the base, the first threaded element being receivable in the cup when the first threaded element is threadedly engaged with the second threaded element.
26. A leg as stated in statement 25, wherein the first threaded element is contactable with the inner surface of the base when the first threaded element is threadedly engaged with the second threaded element.
27. A leg as stated in two or more of statements 1, 11, 21 and 25.
28. A leg as stated in statement 27 further comprising the features of any of statements 2 to 7 when dependent on statement 1, 12 to 17 when dependent on statement 11, 22 to 24 when dependent on statement 21, and 26 when dependent on statement 25.
29. A kit comprising the leg as stated in any preceding statement and a cabinet base.
30. A kit as stated in statement 29, wherein the cabinet base defines (i) a hole therethrough and (ii) a corresponding cabinet base attachment structure to the leg attachment structure for attachment to the leg, the cabinet base attachment structure being positioned relative to the hole such that when the leg is attached to the cabinet base with the leg attachment structure engaged with the cabinet base attachment structure the driving formation is accessible through the hole.
31. A kit as stated in statement 29 or 30 wherein the cabinet is a kitchen cabinet or a bedroom cabinet.
32. A kit as stated in any of statements 29 to 31, wherein the cabinet comprises one or more of: a plurality of side panels, a frontal, a hinge, a drawer box, a frontal handle, an integrated sliding mechanism, a bi-folding mechanism, a push to open mechanism, decorative panelling, a profile, a worktop, internal integrated lighting, an electrical integrated appliance, a top box cabinet, bridging units that integrate and support off the legged cabinet, and an internal accessory such as a shoe shelve, adjustable shelving, pull out locking shelving, a worktop, a hanging unit, a trouser rail, a tie rail, ironing board storage, a mirror, storage organisation unit, a basket, a drawer organisation unit, a corner storage accessory, a pull out storage tower accessory, a door balcony, a frontal back accessory, and a laundry storage unit.
33. A method of assembling a cabinet kit, the kit comprising a cabinet base having a hole therethrough and an adjustable leg, the adjustable leg comprising:
   a first component having an attachment structure for attachment to the cabinet and a first threaded element extending from the attachment structure; and
   a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
   the first and second components being configured so that when they are threadedly engaged the driving formation is accessible through the first threaded element;
   wherein the second component comprises a mounting structure, the second threaded element being releasably engageable with the foot through the mounting structure;
   the method comprising:
      attaching the leg to the base in a location such that the second component can be engaged by a tool passing through the hole in the base;
      positioning the base in a desired installation location; and
      adjusting the leg by means of a tool passing through the hole.
34. A method as stated in statement 33, wherein the adjusting step is performed whilst the leg is engaged with a floor.
35. A method as stated in statement 33 or 34, wherein the kit is a kit as stated in any of statements 29 to 32.

## Claims

1. An adjustable leg for supporting a cabinet, the leg comprising:
a first component having an attachment structure for attachment to the cabinet and a first threaded element extending from the attachment structure; and
a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
the first and second components being configured so that when they are threadedly engaged the driving formation is accessible through the first threaded element;
wherein the second component comprises a mounting structure, the second threaded element being releasably engageable with the foot through the mounting structure.

2. A leg as claimed in claim 1, wherein the mounting structure comprises:
a lip protruding from the second threaded element; and
a clip protruding from the foot, the clip being engageable with the lip so as to restrict displacement of the second threaded element from the foot; and
optionally wherein the lip extends around the perimeter of the second end of the second threaded element.

3. A leg as claimed in claim 2, wherein the clip extends around an arc of at least part of the perimeter of the second end of the second threaded element, and optionally wherein the mounting structure comprises a plurality of clips.

4. A leg as claimed in any preceding claim, wherein the mounting structure comprises:
a first splined portion located on the second threaded element; and
a second splined portion located on the foot, the second spline portion being engageable with the first splined portion so as a prevent rotation of the second threaded element relative to the foot; and
optionally wherein the first splined portion is located inboard of the thread of the second threaded element, and the second splined portion is located on a protrusion of the foot that protrudes into the first splined portion.

5. A leg as claimed in claim 4, wherein the first splined portion and the second splined portion have the same order of symmetry as the number of individual splines of the first splined portion and the second splined portion, and/or wherein the first splined portion and the second splined portion have a different order of symmetry to the number of individual splines of the first splined portion and/or the second splined portion; and optionally wherein the first splined portion and the second splined portion have a lower order of symmetry to the number of individual splines of the first splined portion and/or the second splined portion.

6. An adjustable leg for supporting a cabinet, the leg comprising:
a first component having an attachment structure for attachment to the cabinet and a first threaded element extending from the attachment structure; and
a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
the first and second components being configured so that when they are threadedly engaged the driving formation is accessible through the first threaded element;
wherein the leg comprises a nominal height member, the nominal height member being located in the threaded path of the first component and/or the second component in a nominal height position such that the nominal height member restricts movement of the first component relative to the second component in a direction away from a nominal height configuration of the leg.

7. A leg as claimed in claim 6, wherein the leg further comprises:
a short height configuration in which the first component is closer to the second component than in the nominal height configuration; and
a tall height configuration in which the first component is farther from the second component than in the nominal height configuration; and
optionally wherein the leg is configured such that:
movement of the first component relative to the second component in a direction away from the nominal height configuration towards the short configuration is restricted by the nominal height member; and
movement of the first component relative to the second component in a direction away from the nominal height configuration towards the tall configuration is not restricted by the nominal height member.

8. A leg as claimed in claim 6 or 7, wherein the nominal height member is located outboard of the thread of the second threaded element and in the threaded path of the first component, and optionally wherein the nominal height member extends from the foot towards the first component along a side of the thread of the second threaded element to the nominal height position, and/or wherein, in the nominal height configuration of the leg, the first component rests on the nominal height member, and/or wherein, in the short height configuration, the nominal height member is pushed outboard of the first component by the first component.

9. A leg as claimed in any of claims 6 to 8 wherein the nominal height member is integral with the foot, or wherein the nominal height member is integral with the second threaded element; and optionally wherein the second threaded element is releasably engageable with the foot.

10. An adjustable leg for supporting a cabinet, the leg comprising:
a first component having an attachment structure for attachment to the cabinet and a first threaded element extending from the attachment structure; and
a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
the first and second components being configured so that when they are threadedly engaged the driving formation is accessible through the first threaded element;
wherein the foot comprises a base for supporting the leg on a working surface and an adjustment collar, an outer surface of the base extending uninteruptably from a lowest point of the base to the adjustment collar.

11. A leg as claimed in claim 10, wherein the base forms a domed shape, and/or wherein the diameter of the base is larger than the diameter of the thread of the second threaded element, and optionally wherein the diameter of the base is at least twice the diameter of the thread of the second threaded element.

12. An adjustable leg for supporting a cabinet, the leg comprising:
a first component having an attachment structure for attachment to the cabinet and a first threaded element extending from the attachment structure; and
a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
the first and second components being configured so that when they are threadedly engaged the driving formation is accessible through the first threaded element;
wherein the foot comprises a base for supporting the leg on a working surface, the foot forming a cup defined by an inner surface of the base, the first threaded element being receivable in the cup when the first threaded element is threadedly engaged with the second threaded element.

13. A leg as claimed in claim 12, wherein the first threaded element is contactable with the inner surface of the base when the first threaded element is threadedly engaged with the second threaded element.

14. A kit comprising the leg as claimed in any preceding claim and a cabinet base;
optionally wherein the cabinet base defines (i) a hole therethrough and (ii) a corresponding cabinet base attachment structure to the leg attachment structure for attachment to the leg, the cabinet base attachment structure being positioned relative to the hole such that when the leg is attached to the cabinet base with the leg attachment structure engaged with the cabinet base attachment structure the driving formation is accessible through the hole; and/or
wherein the cabinet is a kitchen cabinet or a bedroom cabinet; and/or
wherein the cabinet comprises one or more of: a plurality of side panels, a frontal, a hinge, a drawer box, a frontal handle, an integrated sliding mechanism, a bi-folding mechanism, a push to open mechanism, decorative panelling, a profile, a worktop, internal integrated lighting, an electrical integrated appliance, a top box cabinet, bridging units that integrate and support off the legged cabinet, and an internal accessory such as a shoe shelve, adjustable shelving, pull out locking shelving, a worktop, a hanging unit, a trouser rail, a tie rail, ironing board storage, a mirror, storage organisation unit, a basket, a drawer organisation unit, a corner storage accessory, a pull out storage tower accessory, a door balcony, a frontal back accessory, and a laundry storage unit.

15. A method of assembling a cabinet kit, the kit comprising a cabinet base having a hole therethrough and an adjustable leg, the adjustable leg comprising:
a first component having an attachment structure for attachment to the cabinet and a first threaded element extending from the attachment structure; and
a second component comprising a second threaded element threadedly engageable at a first end of the second component with the first threaded element, a foot located at an opposite second end of the second component, and a driving formation whereby the second component can be engaged by a tool and driven to rotate, the driving formation being located inboard of the thread of the second threaded element;
the first and second components being configured so that when they are threadedly engaged the driving formation is accessible through the first threaded element;
wherein the second component comprises a mounting structure, the second threaded element being releasably engageable with the foot through the mounting structure;
the method comprising:
attaching the leg to the base in a location such that the second component can be engaged by a tool passing through the hole in the base;
positioning the base in a desired installation location; and
adjusting the leg by means of a tool passing through the hole.
